# EUROPEAN PATENT SPECIFICATION

(11) **EP 4 391 293 B1**
(45) Date of publication and mention of the grant of the patent: **17.12.2025**
(21) Application number: 23827311.4
(22) Date of filing: 06.01.2023
(51) Int. Cl.: H02J 3/38, H02J 3/32, H02J 7/34, H02J 7/35, B60L 53/51, B60L 55/00, B60L 58/12, B60L 53/63

(54) **ENERGY STORAGE SYSTEM INTERWORKING WITH SOLAR POWER GENERATION SYSTEM AND ELECTRIC VEHICLE CHARGING SYSTEM AND METHOD FOR OPERATING SAME**
MIT EINEM SOLARSTROMERZEUGUNGSSYSTEM ZUSAMMENARBEITENDES ENERGIESPEICHERSYSTEM UND ELEKTROFAHRZEUGLADESYSTEM UND VERFAHREN ZUM BETRIEB DAVON
SYSTÈME DE STOCKAGE D'ÉNERGIE COOPÉRANT AVEC UN SYSTÈME DE GÉNÉRATION D'ÉNERGIE SOLAIRE ET SYSTÈME DE CHARGE DE VÉHICULE ÉLECTRIQUE ET SON PROCÉDÉ DE FONCTIONNEMENT

(30) Priority: 24.06.2022 KR 20220077229
(43) Date of publication of application: 26.06.2024
(73) Proprietor: LG Energy Solution, Ltd., Seoul 07335 (KR)
(72) Inventor: KIM, Daesoo, Daejeon 34122 (KR); KOO, Bonjun, Daejeon 34122 (KR)
(74) Representative: Plasseraud IP
(86) International application number: PCT/KR2023/000314
(87) International publication number: WO 2023/249187

(56) References cited:
- EP-A1- 3 993 212
- CN-A- 102 361 334
- JP-A- 2017 028 969
- JP-B2- 5 063 036
- KR-A- 20140 038 796
- KR-A- 20170 073 916
- KR-B1- 101 973 527
- US-A1- 2012 323 386
- US-A1- 2019 135 116

## Description

### [Technical Field]

The present invention relates to an energy storage sytem and a controlling method thereof, and more particularly, to an energy storage sytem connected with a photovoltaic system and an electric vehicle charging system, and a controlling method of an energy storage sytem.

### [Background Art]

An energy storage system relates to renewable energy, a battery that stores electric power, and an existing power grid. Recently, as spread of smart grid and renewable energy is expanding and the efficiency and the stability of the power system are emphasized, a demand for energy storage systems for power supply and demand control and power quality improvement is increasing.

Recently, a penetration rate of photovoltaic power generation systems has been greatly expanded due to renewable energy policies. However, due to this, an excessive supply of power by the photovoltaic power generation system occurs, and a frequency of output curtailments that control power generated by the photovoltaic power generation system not to be supplied to the grid is increasing.

In order to minimize energy loss due to output curtailments, a technology for charging an electric vehicle using solar power generated by linking a photovoltaic system and an electric vehicle charging system has been proposed. Here, it is essential to link an energy storage system (ESS) with the photovoltaic system and the electric vehicle in order to stably supply charging power. The energy storage system can alleviate output variability of the photovoltaic system by storing grid power and photovoltaic power at an appropriate time and discharging the stored power when power supply for charging the electric vehicle is required. When such an energy storage system is linked with the photovoltaic system and the electric vehicle charging system, an appropriate control method in consideration of various factors such as peak generation, output curtailments, and power purchase cost is required.

Further background art is described in US 2012/323386 A1 and CN 102361334 A.

US 2012/323386 A1 discloses an electric power supply system which include ad plurality of storage units and a consumption control unit. The plurality of storage units stores the photovoltaic electric power from a photovoltaic power generation unit and the electric power from the power system. The plurality of storage units are coupled to the wiring of the building in order to discharge the electric power. A consumption control unit controls consumption of the electric power stored in the storage unit, which may be consumed by the storing of the electric power in each of the plurality of storage units, by the electric load, and by reverse-flow of electric power back to the power system.

CN 102361334 A, discloses a photovoltaic energy storage electric vehicle charging station system that includes a photovoltaic system, an energy storage system, a charging system, a DC/

AC inverter, an AC/DC rectifier and a DC/DC converter. The photovoltaic system supplies DC power to the inverter, which is connected to the AC power distribution network and to the energy storage system via the DC/DC converter. The energy storage system is connected to the AC power distribution network via the DC/AC inverter and the DC/DC converter. The DC/DC converter is connected to the charging system, which is connected to the AC power distribution network via the AC/DC rectifier.

### [Detailed Description of the Invention]

### [Technical Problem]

To obviate one or more problems of the related art, embodiments of the present disclosure provide an energy storage system that interworks with a grid, a photovoltaic system, and an electric vehicle charging system.

To obviate one or more problems of the related art, embodiments of the present disclosure also provide a control method of an energy storage system.

To obviate one or more problems of the related art, embodiments of the present disclosure also provide a power management control apparatus for controlling an operation of an energy storage system.

### [Technical Solution]

According to the present invention, in order to achieve the objective of the present disclosure, an energy storage system interworking with a grid, a photovoltaic (PV) system, and an electric vehicle (EV) charging system is provided. The energy storage system includes: a battery system including one or more batteries; a power conditioning device (PCS) configured to control power of the battery system; and a power management controller (PMS) configured to collect state information on one or more of the grid, the PV system, the EV charging system, the battery system, and the PCS, and to control powers of the PV system, the EV charging system, and the battery system based on the collected state information.

The power management controller may further be configured to control the powers of the PV system, the EV charging system, and the battery system according to a control mode corresponding to a current time among a plurality of predefined control modes. Here, the plurality of control modes may be defined in accordance with load levels for each predefined time period based on a level of purchase cost of grid power of the grid, respectively.

The plurality of control modes may include a first control mode defined corresponding to a maximum load period of the grid, a second control mode defined corresponding to a heavy load period of the grid, and a third control mode defined corresponding to a light load period of the grid.

The power management controller is further configured to control a subject of power supply to an electric vehicle (EV), a subject of power supply to the battery system, charging and discharging of the battery system, and output curtailment of the PV system based on a charge amount of the electric vehicle, an amount of PV power generation, and battery state information.

The power management controller is further configured to: upon the charge amount of the electric vehicle not exceeding the amount of PV power generation, control the PV system to charge the electric vehicle with a generated power of the PV system and to charge a battery of the one or more batteries with remaining power after charging the electric vehicle while controlling the generated power of the PV system not to be supplied to the grid when the battery is in a fully charged state.

The power management controller may further be configured to: upon the PV system in a power generating state and no demand for EV charging, control the PV system to charge a battery of the one or more batteries with the generated power of the PV system. Here, the power management controller may control the generated power of the PV system not to be supplied to the grid when the battery is in a fully charged state.

The power management controller may further be configured to: upon a current time corresponding to a maximum load period of the grid and the charge amount of the electric vehicle exceeding the amount of PV power generation, charge the EV with the generated power of the PV system and charge the EV with stored power of the battery system for an insufficient charge amount of the EV. Here, the power management controller may charge the EV with grid power for the insufficient charge amount of the EV when a state of charge of a battery of the one or more of batteries is equal to or lower than a predefined threshold state of charge (SOC).

The power management controller may further be configured to: upon a current time corresponding to a heavy load period of the grid and the charge amount of the electric vehicle exceeding the amount of PV power generation, charge the EV with the generated power of the PV system, charge the EV with stored power of the battery system for an insufficient charge amount of the EV. Here, the power management controller may charge the EV with grid power for the insufficient charge amount of the EV and charge a battery of the one or more batteries with the grid power within a peak limit range when a state of charge of the battery is equal to or lower than a predefined threshold state of charge (SOC) .

The power management controller may further be configured to: upon a current time corresponding to a light load period of the grid and the charge amount of the electric vehicle exceeding the amount of PV power generation, charge the EV with the generated power of the PV system, charge the EV with grid power for an insufficient charge amount of the EV, and control the battery system to be in a standby state.

The power management controller may further be configured to: upon a current time corresponding to a maximum load period of the grid or a heavy load period of the grid and the PV system generating no power, charge the EV with stored power of the battery system. Here, the power management controller may charge the EV with grid power when a state of charge of a battery of the one or more batteries is equal to or lower than a predetermined threshold state of charge (SOC).

The power management controller may further be configured to: upon a current time corresponding to a light load period of the grid and the PV system generating no power, charge the EV having an insufficient amount of charge with grid power and control the battery system to be in a standby state.

The power management controller may further be configured to: upon a current time corresponding to a heavy load period of the grid, no demand for EV charging, and the PV system generating no power, control to charge a battery of the one or more batteries with grid power within a peak limit range. The power management controller may control the battery system to be in a standby state when a state of charge of the battery exceeds a predefined threshold state of charge (SOC).

The power management controller may further be configured to check an accumulated usage of grid power for each predetermined unit time and control to discharge stored power of the battery system in an instance that it is determined that the accumulated usage of grid power exceeds a predetermined peak limit value and a peak of the energy storage system has occurred accordingly.

According to **the** present invention, in order to achieve the objective of the present disclosure, it is provided a control method of an energy storage system interworking with a grid, a photovoltaic (PV) system, and an electric vehicle (EV) charging system, the energy storage system including a battery system, a power conditioning device (PCS), and a power management controller (PMS). The method includes: collecting, by the power management controller, state information on one or more of the grid, the PV system, the EV charging system, the battery system, and the PCS; and controlling, by the power management controller, powers of the PV system, the EV charging system, and the battery system based on the collected state information.

The controlling the powers of the PV system, the EV charging system, and the battery system may include: determining a control mode corresponding to a current time among a plurality of predefined control modes; and controlling the powers of the PV system, the EV charging system, and the battery system according to the determined control mode. Here, the plurality of control modes may be defined in accordance with load levels for each predefined time period based on a level of purchase cost of grid power of the grid, respectively, and the plurality of control modes may include a first control mode defined corresponding to a maximum load period of the grid, a second control mode defined corresponding to a heavy load period of the grid, and a third control mode defined corresponding to a light load period of the grid.

The collecting the state information includes monitoring a charge amount of the electric vehicle, an amount of PV power generation, and battery state information, and the controlling the powers of the PV system, the EV charging system, and the battery system may include controlling a subject of power supply to an electric vehicle (EV), a subject of power supply to the battery system, charging and discharging of the battery system, and output curtailment of the PV system based on the collected state information.

The controlling the powers of the PV system, the EV charging system, and the battery system includes, upon the charge amount of the electric vehicle not exceeding the amount of PV power generation, controlling the PV system to charge the electric vehicle with a generated power of the PV system and to charge a battery with a remaining power after charging the electric vehicle. Here, the controlling powers may include controlling the generated power of the PV system not to be supplied to the grid when a battery is in a fully charged state.

The controlling the powers of the PV system, the EV charging system, and the battery system may include, upon the PV system in a power generating state and no demand for EV charging, controlling the PV system to charge a battery with a generated power of the PV system. Here, the controlling powers may include controlling the generated power of the PV system not to be supplied to the grid when the battery is in a fully charged state.

The controlling the powers of the PV system, the EV charging system, and the battery system may include, upon a current time corresponding to a maximum load period of the grid and the charge amount of the electric vehicle exceeding the amount of PV power generation, charging the EV with a generated power of the PV system, and charging the EV with a stored power of the battery system for an insufficient charge amount of the EV. Here, the controlling powers may include charging the EV with grid power for the insufficient charge amount of the EV when a state of charge of a battery is equal to or lower than a predefined threshold state of charge (SOC).

The controlling the powers of the PV system, the EV charging system, and the battery system may include, upon a current time corresponding to a heavy load period of the grid and the charge amount of the electric vehicle exceeding the amount of PV power generation, charging the EV with a generated power of the PV system, charging the EV with a stored power of the battery system for insufficient charge amount of the EV. Here, the controlling powers may include charging the EV with grid power for the insufficient charge amount of the EV and charging a battery with the grid power within a peak limit range when a state of charge of a battery is equal to or lower than a predefined threshold state of charge (SOC).

The controlling the powers of the PV system, the EV charging system, and the battery system may include, upon a current time corresponding to a light load period of the grid and the charge amount of the electric vehicle exceeding the amount of PV power generation, charging the EV with a generated power of the PV system, charging the EV with grid power for the insufficient charge amount of the EV, and controlling the battery system to be in a standby state.

The controlling the powers of the PV system, the EV charging system, and the battery system may include, upon a current time corresponding to a maximum load period of the grid or a heavy load period of the grid and the PV system generating no power, charging the EV with a stored power of the battery system. Here, the controlling the powers may include charging the EV with grid power when a state of charge of a battery is equal to or lower than a predetermined threshold state of charge (SOC).

The controlling the powers of the PV system, the EV charging system, and the battery system may include, upon a current time corresponding to a light load period of the grid and the PV system generating no power, charging the EV having an insufficient amount of charge with grid power and controlling the battery system to be in a standby state.

The controlling the powers of the PV system, the EV charging system, and the battery system may include, upon a current time corresponding to a heavy load period of the grid, no demand for EV charging, and the PV system generating no power, charging a battery with grid power within a peak limit range. Here, the controlling powers may include controlling the battery system to be in a standby state when a state of charge of the battery exceeds a predefined threshold state of charge (SOC).

The controlling the powers of the PV system, the EV charging system, and the battery system may include, checking an accumulated usage of grid power for each predetermined unit time and controlling to discharge stored power of the battery system in an instance that it is determined that the accumulated usage of grid power exceeds a predetermined peak limit value and a peak of the energy storage system has occurred accordingly.

Although not falling as such within the scope of the claims, it is provided as well a power management control apparatus located in an energy storage system interworking with a grid, a photovoltaic (PV) system, and an electric vehicle (EV) charging system, the energy storage system including a battery system and a power conditioning device (PCS), the power management control apparatus may include: at least one processor; and a memory configured to store at least one instruction, when executed by the at least one processor, to perform operatons.

Here, the operations may include an operation to collect state information on one or more of the grid, the PV system, the EV charging system, the battery system, and the PCS; and an operation to control powers of the PV system, the EV charging system, and the battery system based on the collected state information.

The operation to control powers of the PV system, the EV charging system, and the battery system may include an operation to determine a control mode corresponding to a current time among a plurality of predefined control modes; and an operation to control powers of the PV system, the EV charging system, and the battery system according to the determined control mode.

The instruction to collect state information may include an operation to monitor a charge amount of the electric vehicle, an amount of PV power generation, and battery state information. Furthermore, the operation to control powers may include an operation to control a subject of a power supply to an electric vehicle (EV), a subject of a power supply to the battery system, charging and discharging of the battery system, and output curtailment of the PV system based on the collected state information.

The operation to control powers may include, upon a current time corresponding to a maximum load period of the grid and a charge amount of the electric vehicle exceeding the amount of PV power generation, an operation to charge the EV with generated power of the PV system, and an operation to charge the EV with a stored power of the battery system for an insufficient charge amount of the EV. Here, the operation to control powers may include an operation to charge the EV with grid power for the insufficient charge amount of the EV when state of charge of a battery is equal to or lower than a predefined threshold state of charge (SOC).

The operation to control the powers may include, upon a current time corresponding to a heavy load period of the grid and a charge amount of the electric vehicle exceeding the amount of PV power generation, an operation to charge the EV with generated power of the PV system, to charge the EV with a stored power of the battery system for an insufficient charge amount of the EV. Here, the instruction to control powers may include an instruction to charge the EV with grid power for the insufficient charge amount of the EV and charge the battery with the grid power within a peak limit range when a state of charge of the battery is equal to or lower than a predefined threshold state of charge (SOC).

The operation to control the powers may include, upon a current time corresponding to a light load period of the grid and a charge amount of the electric vehicle exceeding the amount of PV power generation, an operation to charge the EV with a generated power of the PV system, charge the EV having an insufficient amount of charge with grid power, and control the battery system to be in a standby state.

The operation to control the powers may include, upon a current time corresponding to a maximum load period of the grid or a heavy load period of the grid and the PV system generating no power, an operation to charge the EV with a stored power of the battery system. Here, the operation to control the powers may include an operation to charge the EV with grid power when a state of charge of the battery is equal to or lower than a predetermined threshold state of charge (SOC).

The operation to control the powers may include, upon a current time corresponding to a light load period of the grid and the PV system generating no power, an operation to charge the EV having an insufficient amount of charge with grid power and controlling the battery system to be in a standby state.

The operation to control powers may include, upon a current time corresponding to a heavy load period of the grid, no demand for EV charging, and the PV system generating no power, an operation to charge the battery with grid power within a peak limit range. Here, the operation to control the powers may include an operation to control the battery system to be in a standby state when a state of charge of a battery exceeds a predefined threshold state of charge (SOC).

### [Advantageous Effects]

According to the embodiment of the present invention as described above, it is possible to stably supply charging power for an electric vehicle by mitigating output variability of a photovoltaic system, thereby providing an optimal operation in terms of purchase cost and energy efficiency of grid power.

### [Brief Description of the Drawings]

FIG. 1 is a block diagram illustrating an energy storage system associated with a photovoltaic system and an electric vehicle charging system according to the present invention.
FIG. 2 is a block diagram illustrating an energy storage system associated with a photovoltaic system and an electric vehicle charging system according to embodiments of the present invention.
FIG. 3 is an operation flowchart of a control method of an energy storage system according to embodiments of the present invention.
FIG. 4 is an operation flowchart of a control method of an energy storage system operating in a maximum load period according to embodiments of the present invention.
FIG. 5 is an operation flowchart of a control method of an energy storage system operating in a heavy load period according to embodiments of the present invention.
FIG. 6 is an operation flowchart of a control method of an energy storage system operating in a light load period according to embodiments of the present invention.
FIG. 7 is a reference table for explaining a control method of responding to a peak of an energy storage system according to embodiments of the present invention.
FIG. 8 is a block diagram of a power management control apparatus according to embodiments of the present invention.

### [Best Mode]

The present invention may be modified in various forms and have various embodiments, and specific embodiments thereof are shown by way of example in the drawings and will be described in detail below. It should be understood, however, that there is no intent to limit the present invention to the specific embodiments. The scope of the invention is only defined by the appended claims. Like reference numerals refer tc like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A nominal capacity (Nominal Capa.) refers to a capacity [Ah] of a battery set during development by a battery manufacturer.

State of Charge (SOC) refers to a current state of charge of a battery, represented in percent points [%], and State of Health (SOH) may be a current condition of a battery compared to its ideal or original conditions, represented in percent points [%].

A battery rack refers to a system of a minimum single structure assembled by connecting modules set by a battery manufacturer in series/parallel, which can be monitored and controlled by a battery management system (BMS). A battery rack may include several battery modules and a battery protection unit or any other protection device.

A battery bank refers to a group of large-scale battery rack systems configured by connecting several racks in parallel. A bank BMS for a battery bank may monitor and control several rack BMSs, each of which manages a battery rack.

A battery section controller (BSC) refers to a device that controls the topmost level of a battery system including a battery bank level structure or a multiple bank level structure.

A power limit refers to a limit of power that can be output from a battery, which is set in advance by a battery manufacturer based on a battery condition. A rack power limit may mean an output power limit ([kW]) set for a rack level, and can be set based on a SOC and a temperature of the battery.

Output curtailment may refer to an operation of blocking power generated by a photovoltaic system from being supplied to the grid. Here, the output curtailment may be performed with a method of stopping PV power generation by turning off a PV inverter that controls generated power of PV modules or a method of supplying PV generated power only to an energy storage system or an EV charging system and blocking supply to the grid.

Hereinafter, exemplary embodiments of the present invention will be described in detail with reference to the accompanying drawings.

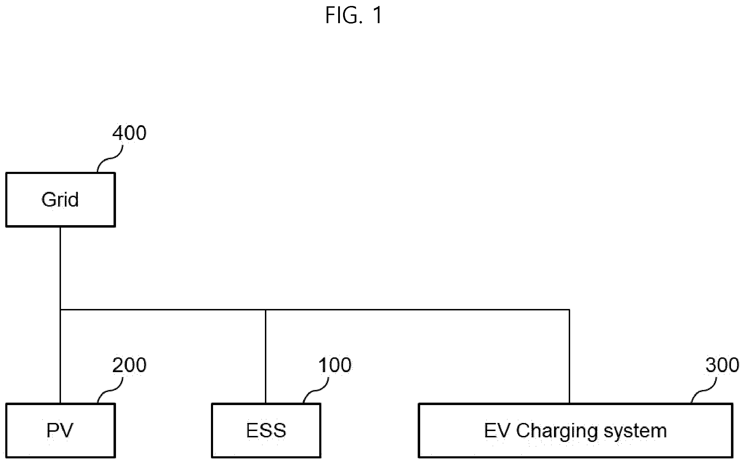

FIG. 1 is a block diagram illustrating an energy storage system associated with a photovoltaic system and an electric vehicle charging system according to the present invention.

As shown in FIG. 1, the energy storage system (ESS, 100) according to the present invention is configured to interwork with a photovoltaic (PV) system 200, an electric vehicle (EV) charging system 300, and a grid 400.

The energy storage system 100 may store power supplied from the grid 400 and the power generated by the PV system 200, discharge the stored power in batteries to charge the EV, and supply it to the EV charging system 300.

The power generated by the PV system 200 may be transmitted to at least one of the energy storage system 100, the EV charging system 300, and the grid 400.

The EV charging system 300 may charge the EV by receiving power corresponding to an amount of charge demand of the EV from at least one of the energy storage system 100, the PV system 200, and the grid 400.

In the embodiments of the present invention, the subject that controls power flows of the energy storage system 100, the PV system 200, and the EV charging system 300 may be a power management control apparatus (PMS) configured in the energy storage system 100. Here, the power management control apparatus (PMS) may collect state information of a battery system and a power conversion system (PCS) in the ESS, the PV system 200, and the EV charging system 300 and may control powers of the battery system, the PV system 200, and the EV charging system 300 based on the collected state information.

The power management control apparatus (PMS) may transmit a control command to respective controllers of the battery system, the PV system 200 and the EV charging system 300 so as to control powers of the battery system, the PV system 200, and the EV charging system 300.

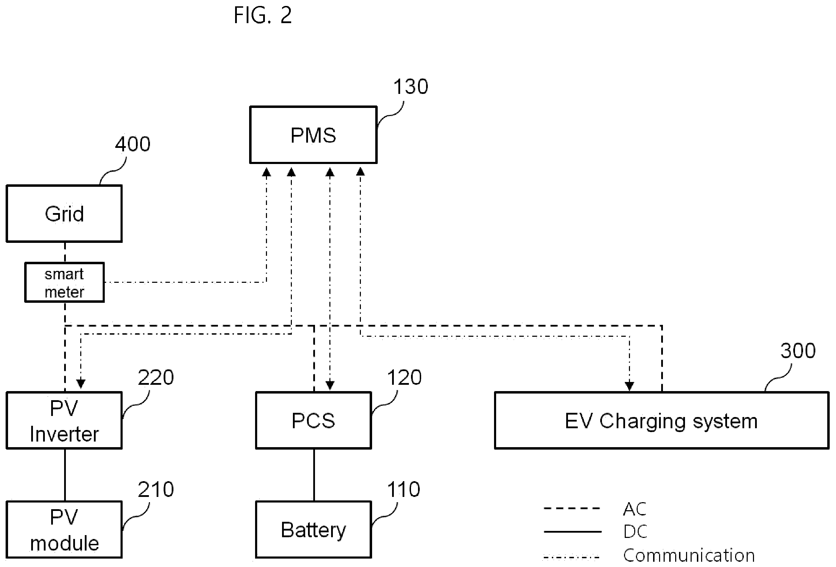

FIG. 2 is a block diagram illustrating an energy storage system associated with a photovoltaic system and an electric vehicle charging system according to embodiments of the present invention.

Referring to FIG. 2, an energy storage system 100 according to embodiments of the present invention may include a battery system 110 including one or more batteries, a power conditioning device (PCS; Power Conditioning System) 120 for controlling power of the battery system 110, and a power management controller (PMS) 130 that controls powers of the PV system 200, the EV charging system 300, and the battery system 110.

The battery system 110 may be typically implemented in a form in which a plurality of battery modules constitute a battery rack and a plurality of battery racks constitute a battery bank. Here, the battery rack may be referred to as a battery pack according to a device or system in which batteries are used. The battery system 110 may include a battery management device (Battery Management System; BMS). The BMS may monitor a current, a voltage, and a temperature of each battery rack (or pack) it manages, calculate a SOC (Status Of Charge) based on the monitoring result, and control charging and discharging.

The power conditioning device (120, PCS; Power Conditioning System) interworking with the battery system 110 may control power supplied from the outside and the power supplied to the outside from the battery system 110, and may include a DC/AC inverter.

The PV system 200 may include a PV module 210 that converts solar energy into electrical energy and outputs power, and a PV inverter 220 that controls power generated by the PV module 210. Here, the PV module 210 may include a plurality of solar panels and the PV inverter 220 may correspond to a DC/AC inverter.

As shown in FIG. 2, an output terminal of the power conditioning device 120, an output terminal of the PV inverter 220, an input terminal of the EV charging system 300, and an input terminal of the grid 400 may be connected to an AC link. Meanwhile, the energy storage system 100 according to the present invention may be configured to interwork with the PV system 200, the EV charging system 300, and the grid 400 in a DC coupled structure instead of an AC coupled structure as shown in FIG. 2.

The power management controller 130 may collect state information of the battery system 110, the PCS 120, the PV system 200, and the EV charging system 300, and may control powers of the battery system 110, the PV system 200, and the EV charging system 300 based on the collected state information.

The power management controller 130 may collect and monitor state information at predetermined unit time intervals, the state information including at least one of battery state information (SOC), charge amount of the battery and discharge amount of the battery, PV generating or not, amount of PV power generation, EV charging or not, EV charge amount (or charging load), and grid power usage.

The power management controller 130 may generate a control command for each of the PCS 120, the PV inverter 220, and the EV charging system 300 based on the collected state information, and transmit the generated control command to each control device of them to control operations of the PCS 120, the PV inverter 220, and the EV charging system 300. For example, the power management controller 130 may determine a subject of power supply (e.g., a battery system) corresponding to an EV charging demand, and transmit a control command (P_EV discharge) so as to supply power corresponding to amount of power demand to a control device (e.g., PCS) of the determined power supplying subject.

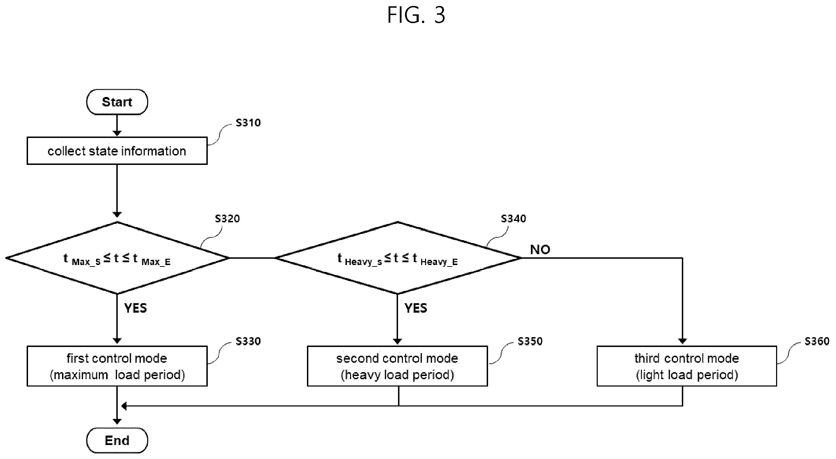

Hereinafter, operations of the power management controller 130 and a control method of the energy storage system will be described in detail with reference to FIGs. 3 to 7.

FIG. 3 is an operation flowchart of a control method of an energy storage system according to embodiments of the present invention.

The power management controller 130 may collect state information of the battery system 110, the PCS 120, the PV system 200, and the EV charging system 300 for each predefined unit time (S310). For example, the power management controller 130 may collect status information every 5 minutes.

The power management controller 130 may control powers of the battery system 110, the PV system 200, and the EV charging system 300 according to a control mode corresponding to current time among a plurality of predefined control modes.

The plurality of control modes may be defined to correspond to a load level for each predefined time zone based on a grade of purchasing cost of grid power, and may include a first control mode defined in correspondence with a maximum load period, a second control mode defined in correspondence with a heavy load period, and a third control mode defined in correspondence with a light load period.

The maximum load period is a time period of the highest purchase cost level, the heavy load period is a time period of a purchase cost level lower than that of the maximum load period, and the light load period may correspond to a time period of a lower purchase cost level than that of the heavy load period. For example, a period of 10:00 am to 5:00 pm may be defined as a maximum load zone, a period of 9:00 am to 10:00 am and a period of 5:00 pm to 12:00 pm may be defined as heavy load zones, and a period of 0:00 am to 9:00 am may be defined as a light load zone. Here, a load level (maximum load, heavy load, or light load) for each time period may be predefined by a grid power management agency based on various environmental factors such as seasons and weathers, and the power management controller 130 may check a load level for each time zone at a certain point of time (e.g., at 0:00 every day).

Referring to FIG. 3, the power management controller 130 may check whether current time corresponds to a maximum load period (t _{Max_S} to t _{Max_E}) (S320), and operate in a first control mode if the current time corresponds to the maximum load period (S330). If the current time does not correspond to the maximum load period, the power management controller 130 may check whether the current time corresponds to a heavy load period (t _{Heavy_s} to t _{Heavy_E}) (S340), and operate in a second control mode if the current time corresponds to the heavy load period (S350). If it does not correspond to the heavy load period, the power management controller 130 may operate in a third control mode (S360).

Meanwhile, operations S310 to S360 of the power management controller 130 shown in FIG. 3 may be repeatedly performed every predetermined unit time (e.g., 5 minutes).

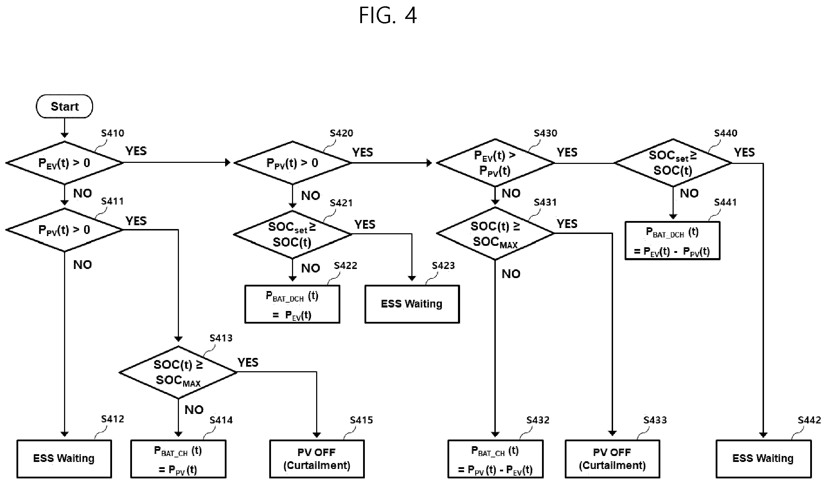

Hereinafter, a control method of the energy storage system according to the first to third control modes will be described in detail with reference to FIGs. 4 to 6. Meanwhile, each parameter described in FIGs. 4 to 6 is as follows.
P_{EV}(t): EV charge amount (or amount of EV charge demand) at time t
P_{PV}(t): amount of PV power generation (or output) at time t
P_{BAT_CH} (t): ESS charge power at time t
P_{BAT_DCH} (t): ESS discharge power at time t
SOCₛₑₜ: threshold SOC (or target SOC)
SOC_{MAX}: maximum SOC

FIG. 4 is an operation flowchart of a control method of an energy storage system operating in a maximum load period (first control mode) according to embodiments of the present invention.

Referring to FIG. 4, the power management controller 130 may check whether the EV is being charged based on collected state information (S410).

First, a method of controlling an energy storage system in the instance that the EV is not in a charging state (NO in S410), that is, when there is no EV charge demand, will be described.

The power management controller 130 may check a power generation state of the PV system (S411) and, if the PV system is not in a power generating state (NO in S411), the power management controller 130 may control the battery system 110 to become a standby state (S412).

If the PV system is in a power generating state (YES in S411), the power management controller 130 may check a state of charge of the battery (S413). Here, the power management controller 130 may control to charge the battery with generated power of the PV system (S414) if the battery is not in a fully charged state (NO in S413), and the power management controller 130 may control the PV system (output curtailment control) so that the generated power of the PV system is not supplied to the grid (S415) if the battery is in a fully charged state (YES in S413).

Next, a method of controlling an energy storage system when the EV is in a charging state (YES in S410), that is, when there is an amount of EV charge demand, will be described.

The power management controller 130 may check whether the PV system is generating power (S420).

If the PV system is not in a power generating state (NO in S420), the power management controller 130 may check a state of charge of the battery (S421). Here, the power management controller 130 may control to charge the EV with stored power of the battery system (S422) when the SOC of the battery exceeds a predetermined threshold SOC (NO in S421), and charge the EV with grid power and cotnrol the battery system 110 into a standby state (S423) if the SOC of the battery is equal to or less than the predetermined threshold SOC (YES in S421).

If the PV system is in a power generating state (YES in S420), the power management controller 130 may compare the EV charge amount with the amount of PV power generation (S430).

If the EV charge amount does not exceed the amount of PV power generation (NO in S430), the power management controller 130 may charge the EV with the generated power of the PV system if the battery is not in a fully charged state (NO in S431), and the power management controller 130 may charge the battery with remaining power after charging the EV (S432). If the battery is in a fully charged state (YES in S431), the power management controller 130 may control the PV system (output curtailment control) so that the generated power of the PV system is not supplied to the grid (S433).

If the EV charge amount exceeds the amount of PV power generation (YES in S430), the power management controller 130 may check a state of charge of the battery (S440). Here, upon the state of charge of the battery exceeding the predefined threshold SOC (NO in S440), the power management controller 130 may charge the EV with the generated power of the PV system and use the stored power of the battery system to charge the EV for a shortfall of the EV charge amount (S441). If the state of charge of the battery is less than or equal to the predefined threshold SOC (YES in S440), the power management controller 130 may control to charge the EV with the generated power of the PV system and charge a shortfall of the EV charge amount with grid power and control the battery system 110 to be in a standby state (S442).

Referring to the control method (first control mode) of the energy storage system shown in FIG. 4, when the current time corresponds to the maximum load period, the power management controller 130 may control power to charge the EV according to a priority defined in the order of PV generated power, stored power of the battery system, and the grid power. Furthermore, the power management controller 130 may control power so that the battery is charged with PV-generated power. In addition, the power management controller 130 may perform output curtailment control of the PV system when the battery cannot be charged (e.g., fully charged state) if the EV charge amount does not exceed the amount of PV power generation and.

In the mean time, in the instance that the PV inverter is turned OFF to limit the output of the PV system, the PV inverter can be controlled to be ON if PV power generation is possible (e.g., sunlight present), the battery is in a chargeable state (e.g., not fully charged), and the EV is being charged.

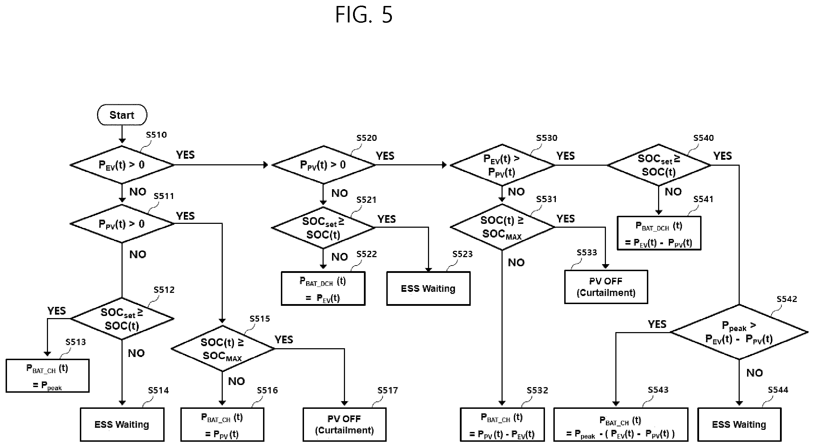

FIG. 5 is an operation flowchart of a control method of an energy storage system operating in a heavy load period (second control mode) according to embodiments of the present invention.

Referring to FIG. 5, the power management controller 130 may check whether the EV is being charged based on the collected state information (S510).

First, a control method of an energy storage system when the EV is not in a charged state (NO in S510), that is, when there is no EV charge demand, will be described.

The power management controller 130 may check a power generation state of the PV system (S511) and the power management controller 130 may check a charging state of the battery (S512) if the PV system is not in a power generatiing state (NO in S511). Here, the power management controller 130 may control to charge the battery with grid power within a peak limit range when the state of charge of the battery is equal to or less than the predefined threshold SOC (YES in S512) (S513), and may control the battery system 110 to be in a standby state (S514) if the state of charge of the battery exceeds the predefined threshold SOC (NO in S512).

The peak limit may refer to a threshold value for cumulative usage of grid power for a predefined period of time. In other words, in a PV non-power generating state and a EV non-charging state, when the SOC of the battery is equal to or less than a set SOC, the battery may be charged with grid power within a range that does not exceed a preset limit of grid power usage.

If the PV system is in a power generating state (YES in S511), the power management controller 130 may check a state of charge of the battery (S515). Here, the power management controller 130 may control to charge the battery with generated power of the PV system (S516) if the battery is not in a fully charged state (NO in S515), and the PV system is controlled (output curtailment control) so that the generated power of the PV system is not supplied to the grid (S517) if the battery is in a fully charged state (YES in S515).

Next, a method of controlling an energy storage system when the EV is in a charging state (YES in S510), that is, when there is an amount of EV charge demand, will be described.

The power management controller 130 may check whether or not the PV system is generating power (S520).

If the PV system is not in a power generating state (NO in S520), the power management controller 130 may check a state of charge of the battery (S521). Here, the power management controller 130 may control the EV to be charged with the stored power of the battery system (S522) if the SOC of the battery exceeds a predetermined threshold SOC (NO in S521) and may control the EV to be charged with grid power and control the battery system 110 to be in a standby state (S523) if the state of charge of the battery is equal to or less than the predetermined threshold SOC (YES in S521).

If the PV system is in a power generating state (YES in S520), the power management controller 130 may compare the EV charge amount and the amount of PV power generation (S530).

If the EV charge amount does not exceed the PV power generation amount (NO in S530), the power management controller 130 may charge the EV with power generated by the PV system if the battery is not in a fully charged state (NO in S531), and control to charge the battery with remaining power after charging the EV (S532). If the battery is in a fully charged state (YES in S531), the power management controller 130 may control the PV system (output curtailment control) so that the generated power of the PV system is not supplied to the grid (S533).

If the EV charge amount exceeds the PV power generation amount (YES in S530), the power management controller 130 may check a state of charge of the battery (S540). Here, when the state of charge of the battery exceeds a predefined threshold SOC (NO in S540), the power management controller 130 may charge the EV with the generated power of the PV system and use stored power of the battery system to charge the EV for insufficient EV charge amount (S541). If the state of charge of the battery is less than or equal to the predetermined threshold SOC (YES in S540), the power management controller 130 may compare a predetermined peak limit value (Pₚₑₐₖ) and a difference between the EV charge amount and the PV power generation amount (P_{EV}(t) - P_{PV}(t)) (S542).

When the peak limit value Pₚₑₐₖ is less than or equal to the difference between the EV charge amount and the PV power generation amount (P_{EV}(t) - P_{PV}(t)), the power management controller 130 may charge the EV with the generated power of the PV system, use grid power to charge insufficient amount of EV charge, and control the battery system to be in a standby state (S544).

When the peak limit value Pₚₑₐₖ exceeds the difference between the EV charge amount and the PV power generation amount (P_{EV}(t) - P_{PV}(t)), the power management controller 130 may charge the EV with the generated power of the PV system, control grid power to charge insufficient amount of EV charge, and control to charge the battery with grid power within the peak limit range (S543). For example, when the peak limit value (Pₚₑₐₖ) is 80 kWh, the EV charge amount is 50 kWh, and the PV power generation amount is 20 kWh, the EV is charged with PV generated power (20 kWh) and grid power (30 kWh). Here, the battery may be charged with grid power within a range of surplus power (80 - 30 = 50 kWh) up to the peak limit value (80 kWh).

Referring to the control method (second control mode) of the energy storage system shown in FIG. 5, when the current time corresponds to a heavy load period, the power management controller 130 may control powers so that the EV is charged according to a priority defined in the order of the PV generated power, the stored power of the battery system, and the grid power. In addition, the power management controller 130 may control power so that the battery is charged according to a priority defined in the order of the PV generated power and the grid power. In addition, the power management controller 130 may perform output curtailment control of the PV system when the battery cannot be charged (e.g., fully charged state) if the EV charge amount does not exceed the PV power generation amount.

In the heavy load period, unlike the maximum load period, the battery may be charged with grid power under specific conditions. Specifically, since the power purchase cost of the heavy load period is cheaper than that of the maximum load period, the battery can be charged using grid power only in a state that satisfies a specific condition (NO in S512 and YES in S542).

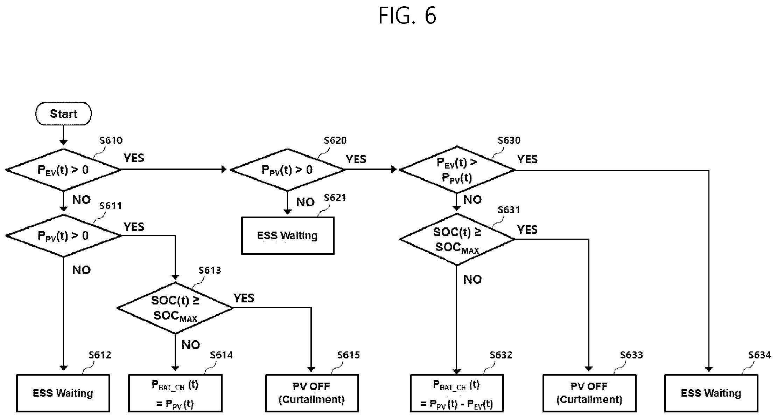

FIG. 6 is an operation flowchart of a control method of an energy storage system operating in a light load period (third control mode) according to embodiments of the present invention.

Referring to FIG. 6, the power management controller 130 may check whether the EV is being charged based on collected state information (S610).

First, a method of controlling an energy storage system when the EV is not in a charging state (NO in S610), that is, when there is no EV charge demand, will be described.

The power management controller 130 may check the power generation state of the PV system (S611) and control the battery system 110 to a standby state (S612) if the PV system is not in a power generating state (NO in S611).

If the PV system is in a power generating state (YES in S611), the power management controller 130 may check a state of charge of the battery (S613). Here, the power management controller 130 may control to charge the battery with generated power of the PV system (S614) if the battery is not in a fully charged state (NO in S613), and the PV system is controlled (output curtailment control) so that the generated power of the PV system is not supplied to the grid (S615) if the battery is in a fully charged state (YES in S613).

Next, a method of controlling an energy storage system when the EV is in a charging state (YES in S610), that is, when there is an amount of EV charge demand, will be described.

The power management controller 130 may check whether the PV system is generating power (S620).

If the PV system is not in a power generating state (NO in S620), the power management controller 130 may charge the EV with grid power and control the battery system 110 to a standby state (S621).

If the PV system is in a power generating state (YES in S620), the power management controller 130 may compare EV charge amount and PV power generation amount (S630).

If the EV charge amount does not exceed the PV power generation amount (NO in S630), the power management controller 130 may control to charge the EV with power generated by the PV system if the battery is not in a fully charged state (NO in S631), and to charge the battery with the remaining power after charging the EV (S632). If the battery is in a fully charged state (YES in S631), the power management controller 130 may control the PV system (output curtailment control) so that the generated power of the PV system is not supplied to the grid (S633).

If the EV charge amount exceeds the PV power generation amount (YES in S630), the EV is charged with the generated power of the PV system, the grid power is controlled to charge insufficient EV charge amount, and the battery system 110 is controlled to a standby state (s634).

Referring to the control method (third control mode) of the energy storage system shown in FIG. 6, when the current time corresponds to a light load period, the power management controller 130 may control powers so that the EV is charged according to a priority defined in the order of of PV generated power and grid power. In addition, the power management controller 130 may control power so that the battery is charged with PV-generated power. In addition, the power management controller 130 may perform output curtailment control of the PV system when the battery cannot be charged (e.g., fully charged state) if the EV charge amount does not exceed the PV power generation amount.

In the light load period, unlike the maximum load period and the heavy load period, the EV is not charged with the stored power of the battery, and unlike the heavy load period, the battery is not charged with grid power. This is because it is advantageous in terms of cost efficiency to charge the EV using grid power at the lowest cost and to maintain the stored power of the battery as much as possible.

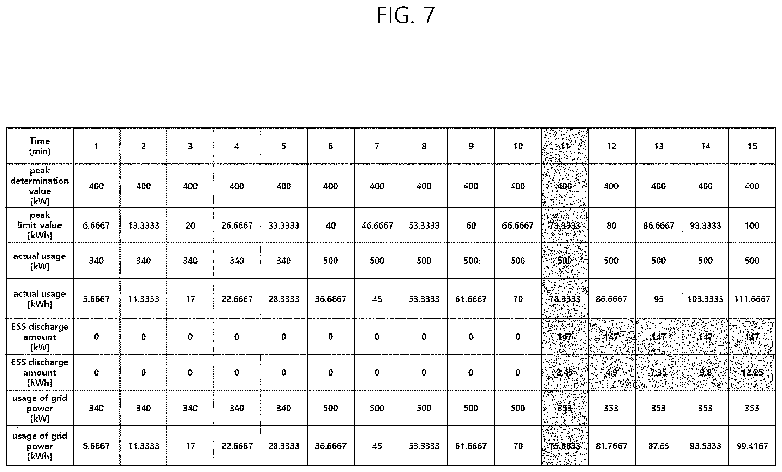

FIG. 7 is a reference table for explaining a control method of responding to a peak of an energy storage system according to embodiments of the present invention. Hereinafter, a control method of responding to a peak of an energy storage system according to embodiments of the present invention will be described with reference to FIG. 7.

The power management controller 130 may determine whether a peak occurs by checking accumulated grid power usage for each predetermined unit time and comparing the accumulated grid power usage with a predefined peak limit value. Here, the peak limit value may mean a threshold value for the cumulative usage of grid power for a predefined time period.

If the accumulated grid power usage exceeds the predefined peak limit value, the power management controller 130 may determine that a peak has occurred and control the PV system, the EV charging system, and the battery system according to a peak response control mode.

When the power management controller 130 operates in the peak response control mode according to a peak occurrence, the power management controller does not operate in a control mode corresponding to current time (first to third control modes), and controls to charge the EV with stored power of the battery system.

When the peak situation is released (the cumulative grid power usage becomes equal to or less than a predetermined peak limit value) due to discharge of the battery system according to the peak response control mode, the power management controller 130 may operate in a control mode corresponding to current time (first, second, and third control modes).

For example, as shown in FIG. 7, when a peak determination value is defined as 400 kW, a cumulative use of grid power for 15 minutes must be controlled so as not to exceed 100 kWh.

When the peak determination period is set to 5 minutes, the power management controller 130 checks the accumulated usage of grid power (actual usage [kWh] in FIG. 7) using a relay (e.g., smart meter in FIG. 2) and determines whether a peak occurs by comparing the accumulated grid power usage and the peak limit value at peak determination times (1 minute, 6 minutes, 11 minutes). Referring to FIG. 7, it is determined that a peak has occurred when the accumulated grid power consumption (78.3333 kWh) exceeds the peak limit value (73.3333 kWh) at 11 minutes which is a third monitoring period. Here, the power management controller 130 may operate in a peak response control mode to discharge stored power of the battery system so that the accumulated grid power usage does not exceed 100 kWh for 15 minutes.

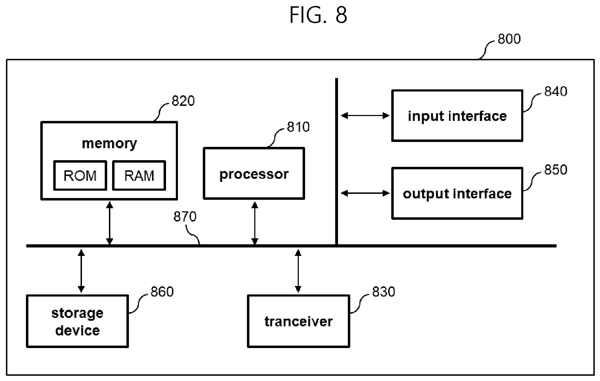

FIG. 8 is a block diagram of a power management control apparatus according to embodiments of the present invention.

The power management control device 800 according to embodiments of the present invention may be located in an energy storage system that interworks with a grid, a PV system, and an EV charging system, and may include at least one processor 810, a memory 820 for storing at least one instruction executed by the processor, and transceiver 830 connected to a network to perform communication.

Here, the at least one instruction may include an instruction to collect state information on one or more of the grid, the PV system, the EV charging system, the battery system, and the PCS; and an instruction to control powers of the PV system, the EV charging system, and the battery system based on collected state information.

The instruction to control powers of the PV system, the EV charging system, and the battery system may include an instruction to determine a control mode corresponding to current time among a plurality of predefined control modes; and an instruction to control powers of the PV system, the EV charging system, and the battery system according to the determined control mode.

The instruction to collect state information may include an instruction to monitor charge amount of the electric vehicle, amount of PV power generation, and battery state information. Furthermore, the instruction to control powers may include an instruction to control a subject of power supply to the EV, a subject of power supply to the battery system, charging and discharging of the battery system, and output curtailment of the PV system based on collected state information.

The instruction to control powers may include, upon the current time corresponding to a maximum load period and the charge amount of the electric vehicle exceeding the amount of PV power generation, an instruction to charge the EV with generated power of the PV system, and an instruction to charge the EV with stored power of the battery system for insufficient charge amount of the EV. Here, the instruction to control powers may include an instruction to charge the EV with grid power for the insufficient charge amount of the EV if a state of charge of the battery is equal to or lower than a predefined threshold SOC.

The instruction to control powers may include, upon the current time corresponding to a heavy load period and the charge amount of the electric vehicle exceeding the amount of PV power generation, an instruction to charge the EV with generated power of the PV system, to charge the EV with stored power of the battery system for insufficient charge amount of the EV. Here, the instruction to control powers may include an instruction to charge the EV with grid power for insufficient charge amount of the EV and charge the battery with the grid power within a peak limit range if a state of charge of the battery is equal to or lower than a predefined threshold SOC.

The instruction to control powers may include, upon the current time corresponding to a light load period and the charge amount of the electric vehicle exceeding the amount of PV power generation, an instruction to charge the EV with generated power of the PV system, charge the EV with grid power for insufficient charge amount of the EV, and control the battery system to be in a standby state.

The instruction to control powers may include, upon the current time corresponding to a maximum load period or a heavy load period and the PV generating no power, an instruction to charge the EV with stored power of the battery system. Here, the instruction to control powers may include an instruction to charge the EV with grid power if the state of charge of the battery is equal to or lower than a predetermined threshold SOC.

The instruction to control powers may include, upon the current time corresponding to a light load period and the PV generating no power, an instruction to charge insufficient amount of the EV with grid power and controlling the battery system to be in a standby state.

The instruction to control powers may include, upon the current time corresponding to a heavy load period, no demand for EV charging, and the PV generating no power, an instruction to charge the battery with grid power within a peak limit range. Here, the instruction to control powers may include an instruction to control the battery system to be in a standby state if a state of charge of the battery exceeds a predefined threshold SOC.

The power management control apparatus 800 of the energy storage system may further include an input interface 840, an output interface 850, a storage device 860, and the like. Respective components included in the power management control apparatus 300 may be connected by a bus 870 to communicate with each other.

Here, the processor 810 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the scope of the present invention described in the appending claims.

## Claims

1. An energy storage system interworking with a grid (400), a photovoltaic, PV, system (200), and an electric vehicle, - EV, charging system (300), the energy storage system comprising:
a battery system (100) including one or more batteries;
a power conditioning device, PCS, (120) configured to control power of the battery system; and
a power management controller, PMS, (130) configured to collect state information on one or more of the grid, the PV system, the EV charging system, the battery system, and the PCS, and to control powers of the PV system, the EV charging system, and the battery system based on the collected state information;
wherein the power management controller is further configured to control a subject of power supply to an electric vehicle, EV, a subject of power supply to the battery system, charging and discharging of the battery system, and output curtailment of the PV system based on a charge amount of the electric vehicle, an amount of PV power generation, and battery state information;
wherein the power management controller is further configured to:
upon the charge amount of the electric vehicle not exceeding the amount of PV power generation,
control the PV system to charge the electric vehicle with a generated power of the PV system and to charge a battery of the one or more batteries with a remaining power after charging the electric vehicle while controlling the generated power of the PV system not to be supplied to the grid when the battery is in a fully charged state.

2. The energy storage system of claim 1, wherein the power management controller is further configured to control the powers of the PV system, the EV charging system, and the battery system according to a control mode corresponding to a current time among a plurality of predefined control modes.

3. The energy storage system of claim 1, wherein the power management controller is further configured to:
upon the PV system in a power generating state and no demand for EV charging,
control the PV system to a battery of the one or more batteries with the generated power of the PV system while controlling the generated power of the PV system not to be supplied to the grid when the battery is in a fully charged state.

4. The energy storage system of claim 1, wherein the power management controller is further configured to:
upon a current time corresponding to a maximum load period of the grid and the charge amount of the electric vehicle exceeding the amount of PV power generation,
charge the EV with the generated power of the PV system, and
charge the EV with stored power of the battery system for an insufficient charge amount of the EV, but charge the EV with grid power for the insufficient charge amount of the EV when a state of charge of a battery of the one or more of batteries is equal to or lower than a predefined threshold state of charge, SOC.

5. The energy storage system of claim 1, wherein the power management controller is further configured to:
upon a current time corresponding to a heavy load period of the grid and the charge amount of the electric vehicle exceeding the amount of PV power generation,
charge the EV with the generated power of the PV system,
charge the EV with stored power of the battery system for an insufficient charge amount of the EV, but charge the EV with grid power for the insufficient charge amount of the EV and charge a battery of the one or more batteries with the grid power within a peak limit range when a state of charge of the battery is equal to or lower than a predefined threshold SOC.

6. The energy storage system of claim 1, wherein the power management controller is further configured to:
upon a current time corresponding to a light load period of the grid and the charge amount of the electric vehicle exceeding the amount of PV power generation,
charge the EV with the generated power of the PV system, charge the EV with grid power for an insufficient charge amount of the EV, and control the battery system to be in a standby state.

7. A control method of an energy storage system interworking with a grid, a photovoltaic, PV, system (200), and an electric vehicle, EV, charging system (300), the energy storage system including a battery system, a power conditioning device, PCS, (120), and a power management controller, PMS (130) the method comprising:
collecting, by the power management controller, state information on one or more of the grid, the PV system, the EV charging system, the battery system, and the PCS; and
controlling, by the power management controller, powers of the PV system, the EV charging system, and the battery system based on the collected state information;
wherein the collecting the state information includes monitoring a charge amount of the electric vehicle, an amount of PV power generation, and battery state information,
wherein the controlling the powers of the PV system, the EV charging system, and the battery system includes controlling a subject of power supply to an electric vehicle, EV, a subject of power supply to the battery system, charging and discharging of the battery system, and output curtailment of the PV system based on the collected state information; and
wherein the controlling the powers of the PV system, the EV charging system, and the battery system includes:
upon the charge amount of the electric vehicle not exceeding the amount of PV power generation,
controlling the PV system to charge the electric vehicle with a generated power of the PV system and to charge a battery with a remaining power after charging the electric vehicle while controlling the generated power of the PV system not to be supplied to the grid when the battery is in a fully charged state.

8. The method of claim 7, wherein the controlling the powers of the PV system, the EV charging system, and the battery system includes:
upon the PV system in a power generating state and no demand for EV charging,
controlling the PV system to charge a battery with a generated power of the PV system while controlling the generated power of the PV system not to be supplied to the grid when the battery is in a fully charged state.

9. The method of claim 7, wherein the controlling the powers of the PV system, the EV charging system, and the battery system includes:
upon a current time corresponding to a maximum load period of the grid and the charge amount of the electric vehicle exceeding the amount of PV power generation,
charging the EV with a generated power of the PV system; and
charging the EV with a stored power of the battery system for an insufficient charge amount of the EV, but charging the EV with grid power for the insufficient charge amount of the EV when a state of charge of a battery is equal to or lower than a predefined threshold state of charge, SOC.

10. The method of claim 7, wherein the controlling the powers of the PV system, the EV charging system, and the battery system includes:
upon a current time corresponding to a heavy load period of the grid and the charge amount of the electric vehicle exceeding the amount of PV power generation,
charging the EV with a generated power of the PV system; and
charging the EV with a stored power of the battery system for an insufficient charge amount of the EV, but charging the EV with grid power for the insufficient charge amount of the EV and charging a battery with the grid power within a peak limit range when a state of charge of a battery is equal to or lower than a predefined threshold state of charge, SOC.

11. The method of claim 7, wherein the controlling the powers of the PV system, the EV charging system, and the battery system includes:
upon a current time corresponding to a light load period of the grid and the charge amount of the electric vehicle exceeding the amount of PV power generation,
charging the EV with a generated power of the PV system, charging the EV with grid power for the insufficient charge amount of the EV, and controlling the battery system to be in a standby state.

## Patentansprüche

1. Energie-Speichersystem, welches mit einem Netz (400), einem Fotovoltaik (PV)-System (200) und einem Elektrofahrzeug-, EV-, Ladesystem (300) zusammenwirkt, wobei das Energie-Speichersystem umfasst:
ein Batteriesystem (100), welches eine oder mehrere Batterien umfasst;
eine Leistung-Konditionierungsvorrichtung, PCS, (120), welche dazu eingerichtet ist, eine Leistung des Batteriesystems zu steuern; und
eine Leistungsverwaltung-Steuereinheit, PMS, (130), welche dazu eingerichtet ist, Zustandsinformationen über eines oder mehrere aus dem Netz, dem PV-System, dem EV-Ladesystem, dem Batteriesystem und dem PCS zu sammeln und Leistungen des PV-Systems, des EV-Ladesystems und des Batteriesystems auf Grundlage der gesammelten Zustandsinformationen zu steuern;
wobei die Leistungsverwaltung-Steuereinheit ferner dazu eingerichtet ist, ein Subjekt einer Leistungszufuhr zu einem Elektrofahrzeug, EV, ein Subjekt einer Leistungszufuhr zu dem Batteriesystem, ein Laden und Entladen des Batteriesystems und eine Ausgabebeschränkung des PV-Systems auf Grundlage einer Ladungsmenge des Elektrofahrzeugs, einer Menge einer PV-Leistungserzeugung und Batterie-Zustandsinformationen zu steuern;
wobei die Leistungsverwaltung-Steuereinheit ferner dazu eingerichtet ist:
daraufhin, dass die Ladungsmenge des Elektrofahrzeugs die Menge der PV-Leistungserzeugung nicht übersteigt,
das PV-System dazu zu steuern, das Elektrofahrzeug mit einer erzeugten Leistung des PV-Systems zu laden und eine Batterie aus der einen oder den mehreren Batterien mit einer verbleibenden Leistung nach dem Laden des Elektrofahrzeugs zu laden, während die erzeugte Leistung des PV-Systems gesteuert wird, nicht zu dem Netz geliefert zu werden, wenn die Batterie in einem vollständig geladenen Zustand ist.

2. Energie-Speichersystem nach Anspruch 1, wobei die Leistungsverwaltung-Steuereinheit ferner dazu eingerichtet ist, die Leistungen des PV-Systems, des EV-Ladesystems und des Batteriesystems gemäß eines Steuermodus zu steuern, welcher einer momentanen Zeit entspricht, unter einer Mehrzahl von vordefinierten Steuermodi.

3. Energie-Speichersystem nach Anspruch 1, wobei die Leistungsverwaltung-Steuereinheit ferner dazu eingerichtet ist:
daraufhin, dass das PV-System in einem Leistung-Erzeugungszustand ist und kein Bedarf nach einem EV-Laden besteht,
das PV-System zu einer Batterie aus der einen oder den mehreren Batterien mit der erzeugten Leistung des PV-Systems zu steuern, während die erzeugte Leistung des PV-Systems nicht zu dem Netz geliefert wird, wenn die Batterie in einem vollständig geladenen Zustand ist.

4. Energie-Speichersystem nach Anspruch 1, wobei die Leistungsverwaltung-Steuereinheit ferner dazu eingerichtet ist:
daraufhin, dass eine momentane Zeit einer maximalen Lastperiode des Netzes entspricht und die Ladungsmenge des Elektrofahrzeugs die Menge an PV-Leistungserzeugung überschreitet,
das EV mit der erzeugten Leistung des PV-Systems zu laden, und
das EV mit gespeicherter Leistung des Batteriesystems für eine nicht ausreichende Ladungsmenge des EV zu laden, jedoch das EV mit Netzleistung für die nicht ausreichende Ladungsmenge des EV zu laden, wenn ein Ladezustand einer Batterie aus der einen oder den mehreren Batterien gleich oder geringer als ein vorbestimmter Schwellenwert-Ladezustand, SOC, ist.

5. Energie-Speichersystem nach Anspruch 1, wobei die Leistungsverwaltung-Steuereinheit ferner dazu eingerichtet ist:
daraufhin, dass eine momentane Zeit einer hohen Lastperiode des Netzes entspricht und die Ladungsmenge des Elektrofahrzeugs die Menge an PV-Leistungserzeugung übersteigt,
das EV mit der erzeugten Leistung des PV-Systems zu laden,
das EV mit gespeicherter Leistung des Batteriesystems für eine nicht ausreichende Ladungsmenge des EV zu laden, jedoch das EV mit Netzleistung für die nicht ausreichende Ladungsmenge des EV zu laden und eine Batterie aus der einen oder den mehreren Batterien mit Netzleistung innerhalb eines Spitzen-Grenzbereichs zu laden, wenn ein Ladezustand der Batterie gleich oder niedriger als ein vorbestimmter Schwellenwert-SOC ist.

6. Energie-Speichersystem nach Anspruch 1, wobei die Leistungsverwaltung-Steuereinheit ferner dazu eingerichtet ist:
daraufhin, dass eine momentane Zeit einer leichten Lastperiode des Netzes entspricht und die Ladungsmenge des Elektrofahrzeugs die Menge an PV-Leistungserzeugung übersteigt,
das EV mit der erzeugten Leistung des PV-Systems zu laden, das EV mit Netzleistung für eine nicht ausreichende Ladungsmenge des EV zu laden und das Batteriesystem zu steuern, in einem Standby-Zustand zu sein.

7. Steuerverfahren eines Energie-Speichersystems, welches mit einem Netz, einem Fotovoltaik (PV)-System (200) und einem Elektrofahrzeug-, EV-, Ladesystem (300) zusammenwirkt, wobei das Energie-Speichersystem ein Batteriesystem, eine Leistung-Konditionierungsvorrichtung, PCS, (120) und eine Leistungsverwaltung-Steuereinheit, PMS, (130) umfasst, wobei das Verfahren umfasst:
Sammeln, durch die Leistungsverwaltung-Steuereinheit, von Zustandsinformationen über eines oder mehrere aus dem Netz, dem PV-System, dem EV-Ladesystem, dem Batteriesystem und dem PCS; und
Steuern, durch die Leistungsverwaltung-Steuereinheit, von Leistungen des PV-Systems, des EV-Ladesystems und des Batteriesystems auf Grundlage der gesammelten Zustandsinformationen;
wobei das Sammeln der Zustandsinformationen ein Überwachen einer Ladungsmenge des Elektrofahrzeugs, eine Menge einer PV-Leistungserzeugung und Batterie-Zustandsinformationen umfasst,
wobei das Steuern der Leistungen des PV-Systems, des EV-Ladesystems und des Batteriesystems ein Steuern eines Subjekts einer Leistungszufuhr zu einem Elektrofahrzeug, EV, einem Subjekt einer Leistungszufuhr zu dem Batteriesystem, ein Laden und Entladen des Batteriesystems und eine Ausgabebeschränkung des PV-Systems auf Grundlage der gesammelten Zustandsinformationen umfasst; und
wobei das Steuern der Leistungen des PV-Systems, des EV-Ladesystems und des Batteriesystems umfasst:
daraufhin, dass die Ladungsmenge des Elektrofahrzeugs die Menge der PV-Leistungserzeugung nicht übersteigt,
Steuern des PV-Systems, das Elektrofahrzeug mit einer erzeugten Leistung des PV-Systems zu laden und eine Batterie mit einer verbleibenden Leistung nach dem Laden des Elektrofahrzeugs zu laden, während die erzeugte Leistung des PV-Systems gesteuert wird, nicht zu dem Netz geliefert zu werden, wenn die Batterie in einem vollständig geladenen Zustand ist.

8. Verfahren nach Anspruch 7, wobei das Steuern der Leistungen des PV-Systems, des EV-Ladesystems und des Batteriesystems umfasst:
daraufhin, dass das PV-System in einem Leistung-Erzeugungszustand ist und kein Bedarf nach einem EV-Laden besteht,
Steuern des PV-Systems, eine Batterie mit einer erzeugten Leistung des PV-Systems zu laden, während die erzeugte Leistung des PV-Systems gesteuert wird, nicht zu dem Netz geliefert zu werden, wenn die Batterie in einem vollständig geladenen Zustand ist.

9. Verfahren nach Anspruch 7, wobei das Steuern der Leistungen des PV-Systems, des EV-Ladesystems und des Batteriesystems umfasst:
daraufhin, dass eine momentane Zeit einer maximalen Lastperiode des Netzes entspricht und die Lademenge des Elektrofahrzeugs die Menge an PV-Leistungserzeugung überschreitet,
Laden des EV mit einer erzeugten Leistung des PV-Systems; und
Laden des EV mit einer gespeicherten Leistung des Batteriesystems für eine nicht ausreichende Ladungsmenge des EV, jedoch Laden des EV mit Netzleistung für die nicht ausreichende Ladungsmenge des EV, wenn ein Ladezustand einer Batterie gleich oder geringer als ein vorbestimmter Schwellenwert-Ladezustand, SOC, ist.

10. Verfahren nach Anspruch 7, wobei das Steuern der Leistungen des PV-Systems, des EV-Ladesystems und des Batteriesystems umfasst:
daraufhin, dass eine momentane Zeit einer hohen Lastperiode des Netzes entspricht und die Ladungsmenge des Elektrofahrzeugs die Menge an PV-Leistungserzeugung übersteigt,
Laden des EV mit einer erzeugten Leistung des PV-Systems; und
Laden des EV mit einer gespeicherten Leistung des Batteriesystems für eine nicht ausreichende Ladungsmenge des EV, jedoch Laden des EV mit Netzleistung für die nicht ausreichende Ladungsmenge des EV und Laden einer Batterie mit der Netzleistung innerhalb eines Spitzen-Grenzbereichs, wenn ein Ladezustand einer Batterie gleich oder niedriger als ein vorbestimmter Schwellenwert-SOC ist.

11. Verfahren nach Anspruch 7, wobei das Steuern der Leistungen des PV-Systems, des EV-Ladesystems und des Batteriesystems umfasst:
daraufhin, dass eine momentane Zeit einer leichten Lastperiode des Netzes entspricht und die Ladungsmenge des Elektrofahrzeugs die Menge an PV-Leistungserzeugung übersteigt,
Laden des EV mit einer erzeugten Leistung des PV-Systems, Laden des EV mit Netzleistung für die nicht ausreichende Ladungsmenge des EV und Steuern des Batteriesystems, in einem Standby-Zustand zu sein.

## Revendications

1. Système de stockage d'énergie interagissant avec un réseau (400), un système photovoltaïque, PV, (200), et un système de charge (300) de véhicule électrique , EV, le système de stockage d'énergie comprenant :
un système de batterie (100) comportant une ou plusieurs batteries ;
un dispositif de conditionnement de puissance, PCS, (120) configuré pour commander la puissance du système de batterie ; et
un dispositif de commande de gestion de puissance, PMS, (130) configuré pour collecter des informations d'état sur un ou plusieurs du réseau, du système PV, du système de charge d'EV, du système de batterie et du PCS, et pour commander les puissances du système PV, du système de charge d'EV et du système de batterie en fonction des informations d'état collectées ;
dans lequel le dispositif de commande de gestion de puissance est en outre configuré pour commander une soumission d'alimentation électrique à un véhicule électrique, EV, une soumission d'alimentation électrique au système de batterie, la charge et la décharge du système de batterie, et la limitation de sortie du système PV en fonction d'une quantité de charge du véhicule électrique, d'une quantité de production de puissance PV et d'informations d'état de la batterie ;
dans lequel le dispositif de commande de gestion de puissance est en outre configuré pour :
lorsque la quantité de charge du véhicule électrique ne dépasse pas la quantité de production de puissance PV,
commander le système PV pour charger le véhicule électrique avec une puissance produite par le système PV et pour charger une batterie des une ou plusieurs batteries avec une puissance restante après la charge du véhicule électrique tout en commandant la puissance produite par le système PV pour qu'elle ne soit pas fournie au réseau lorsque la batterie est dans un état complètement chargé.

2. Système de stockage d'énergie selon la revendication 1, dans lequel le dispositif de commande de gestion de puissance est en outre configuré pour commander les puissances du système PV, du système de charge d'EV et du système de batterie selon un mode de commande correspondant à un moment actuel parmi une pluralité de modes de commande prédéfinis.

3. Système de stockage d'énergie selon la revendication 1, dans lequel le dispositif de commande de gestion de puissance est en outre configuré pour :
lorsque le système PV est dans un état de production de puissance et en l'absence de demande de charge d'EV,
commander le système PV par rapport à une batterie des une ou plusieurs batteries avec la puissance produite par le système PV tout en commandant la puissance produite par le système PV pour qu'elle ne soit pas fournie au réseau lorsque la batterie est dans un état complètement chargé.

4. Système de stockage d'énergie selon la revendication 1, dans lequel le dispositif de commande de gestion de puissance est en outre configuré pour :
lorsqu'un moment actuel correspond à une période de charge maximale du réseau et que la quantité de charge du véhicule électrique dépasse la quantité de production de puissance PV,
charger l'EV avec la puissance produite par le système PV, et
charger l'EV avec la puissance stockée du système de batterie pour une quantité de charge insuffisante de l'EV, mais charger l'EV avec la puissance du réseau pour la quantité de charge insuffisante de l'EV lorsqu'un état de charge d'une batterie des une ou plusieurs batteries est égal ou inférieur à un état de charge, SOC, seuil prédéfini.

5. Système de stockage d'énergie selon la revendication 1, dans lequel le dispositif de commande de gestion de puissance est en outre configuré pour :
lorsqu'un moment actuel correspond à une période de forte charge du réseau et que la quantité de charge du véhicule électrique dépasse la quantité de production de puissance PV,
charger l'EV avec la puissance produite par le système PV,
charger l'EV avec la puissance stockée du système de batterie pour une quantité de charge insuffisante de l'EV, mais charger l'EV avec la puissance du réseau pour la quantité de charge insuffisante de l'EV et charger une batterie des une ou plusieurs batteries avec la puissance du réseau dans une plage limite de pointe lorsqu'un état de charge de la batterie est égal ou inférieur à un SOC seuil prédéfini.

6. Système de stockage d'énergie selon la revendication 1, dans lequel le dispositif de commande de gestion de puissance est en outre configuré pour :
lorsqu'un moment actuel correspond à une période de faible charge du réseau et que la quantité de charge du véhicule électrique dépasse la quantité de production de puissance PV,
charger l'EV avec la puissance produite par le système PV, charger l'EV avec la puissance du réseau pour une quantité de charge insuffisante de l'EV, et commander le système de batterie pour qu'il soit dans un mode veille.

7. Procédé de commande d'un système de stockage d'énergie interagissant avec un réseau, un système photovoltaïque, PV (200) et un système de charge de véhicule électrique, EV, (300), le système de stockage d'énergie comportant un système de batterie, un dispositif de conditionnement de puissance, PCS, (120) et un dispositif de commande de gestion de puissance, PMS, (130), le procédé comprenant :
la collecte, par le dispositif de commande de gestion de puissance, d'informations d'état sur un ou plusieurs du réseau, du système PV, du système de charge d'EV, du système de batterie et du PCS ; et
la commande, par le dispositif de commande de gestion de puissance, des puissances du système PV, du système de charge d'EV et du système de batterie en fonction des informations d'état collectées ;
dans lequel la collecte des informations d'état comporte la surveillance d'une quantité de charge du véhicule électrique, d'une quantité de production de puissance PV et d'informations d'état de la batterie,
dans lequel la commande des puissances du système PV, du système de charge d'EV et du système de batterie comporte la commande d'une soumission d'alimentation électrique à un véhicule électrique, EV, d'une soumission dl'alimentation électrique au système de batterie, de la charge et la décharge du système de batterie, et de la limitation de sortie du système PV en fonction des informations d'état collectées ; et
dans lequel la commande des puissances du système PV, du système de charge d'EV et du système de batterie comporte :
lorsque la quantité de charge du véhicule électrique ne dépasse pas la quantité de production de puissance PV,
la commande du système PV pour charger le véhicule électrique avec une puissance produite par le système PV et pour charger une batterie avec une puissance restante après la charge du véhicule électrique, tout en commandant la puissance produite par le système PV pour qu'elle ne soit pas fournie au réseau lorsque la batterie est dans un état complètement chargé.

8. Procédé selon la revendication 7, dans lequel la commande des puissances du système PV, du système de charge d'EV et du système de batterie comporte :
lorsque le système PV est dans un état de production de puissance et en l'absence de demande de charge d'EV,
la commande du système PV pour charger une batterie avec une puissance produite par le système PV tout en commandant la puissance produite par le système PV pour qu'elle ne soit pas fournie au réseau lorsque la batterie est dans un état complètement chargé.

9. Procédé selon la revendication 7, dans lequel la commande des puissances du système PV, du système de charge d'EV et du système de batterie comporte :
lorsqu'un moment actuel correspond à une période de charge maximale du réseau et que la quantité de charge du véhicule électrique dépasse la quantité de production de puissance PV,
la charge de l'EV avec une puissance produite par le système PV ; et
la charge de l'EV avec une puissance stockée du système de batterie pour une quantité de charge insuffisante de l'EV, mais la charge de l'EV avec la puissance du réseau pour la quantité de charge insuffisante de l'EV lorsqu'un état de charge d'une batterie est égal ou inférieur à un état de charge, SOC, seuil prédéfini.

10. Procédé selon la revendication 7, dans lequel la commande des puissances du système PV, du système de charge d'EV et du système de batterie comporte :
lorsqu'un moment actuel correspond à une période de forte charge du réseau et que la quantité de charge du véhicule électrique dépasse la quantité de production de puissance PV,
la charge de l'EV avec une puissance produite par le système PV ; et
la charge de l'EV avec une puissance stockée du système de batterie pour une quantité de charge insuffisante de l'EV, mais la charge de l'EV avec la puissance du réseau pour la quantité de charge insuffisante de l'EV et la charge d'une batterie avec la puissance du réseau dans une plage limite de pointe lorsqu'un état de charge d'une batterie est égal ou inférieur à un état de charge, SOC, seuil prédéfini.

11. Procédé selon la revendication 7, dans lequel la commande des puissances du système PV, du système de charge d'EV et du système de batterie comporte :
lorsqu'un moment actuel correspond à une période de faible charge du réseau et que la quantité de charge du véhicule électrique dépasse la quantité de production de puissance PV,
la charge de l'EV avec une puissance produite par le système PV, la charge de l'EV avec la puissance du réseau pour la quantité de charge insuffisante de l'EV, et la commande du système de batterie pour qu'il soit dans un mode veille.
